# EUROPEAN PATENT SPECIFICATION

(11) **EP 4 628 458 B1**
(45) Date of publication and mention of the grant of the patent: **22.04.2026**
(21) Application number: 24223407.8
(22) Date of filing: 27.12.2024
(51) Int. Cl.: C03B 9/16, C03B 9/193, C03B 9/00, F16P 1/00, F16P 3/02

(54) **INDIVIDUAL SECTION MACHINE FOR FORMING HOLLOW GLASSWARE**
EINZELSCHNITTMASCHINE ZUM HERSTELLEN VON HOHLGLASGEGENSTÄNDEN
MACHINE À SECTIONS INDIVIDUELLES POUR LA FABRICATION DE VERRE CREUX

(30) Priority: 05.04.2024 IT 202400007576
(43) Date of publication of application: 08.10.2025
(73) Proprietor: Bottero S.p.A., 12100 Cuneo (IT)
(72) Inventor: DI PRIMA, Elisa, 12100 CUNEO (IT); GIACCONE, Ivan, 12100 CUNEO (IT); OSTORERO, Marcello, 12100 CUNEO (IT); BAROLO, Maurizio, 12100 CUNEO (IT)
(74) Representative: Studio Torta S.p.A.

(56) References cited:
- DE-U1- 202016 000 461
- GB-A- 2 466 834

## Description

### Technical field

The present invention relates to an individual section machine, usually referred to as an IS machine, for forming hollow glassware.

### Background

As is well known, machines for forming hollow glassware, commonly known as IS machines, comprise a plurality of forming sections, each operating independently of the other sections to form a respective set of glassware from glass gobs fed from a distributor.

Each forming section includes a blank mould and a finishing mould, which are configured to form a given number of glass products, between one and four, are driven by respective mould opening/closing devices, and are associated with respective cooling systems. Each forming section also includes a grip and inversion unit to pick up the semi-finished glass items (also known as "parisons") formed in the blank mould and transfer them to the finishing mould, and a grip and transfer unit to pick up the glass items formed in the finishing mould and deposit them on a support plane, from which the same items are then pushed onto an outlet conveyor, parallel to the row of forming sections.

Each forming section then has a plurality of mechanisms associated with the moulds, including: a funnel mechanism and a buffer mechanism, associated with the blank mould, to guide the entry of the glass gobs and close the blank mould at the top; a punch mechanism, to create a cavity within the glass mass contained in the blank mould; and a pneumatic blow head mechanism associated with the finishing mould to force the glass against the walls of that mould and to cool those walls.

In known solutions, for each forming section, the various components are supported, directly or indirectly, by a respective parallelepipedal body, usually referred to as a box. The boxes of the various forming sections are defined by separate bodies, usually manufactured in a modular manner, with standard dimensions, and supported by a common base. At the same time, the boxes are arranged on the base in positions that are in contact with each other to form a continuous row.

Known solutions of the type just described, although universally used, are not, however, without their critical issues.

The regulations in force require that the forming sections adjacent to the one where access is to be gained must be stopped in order to avoid contact with moving parts, but additional precautions should be taken to effectively and efficiently protect workers.

In other words, although there is currently no specific legislation requiring the use of physical barriers in IS machines, there is a strong interest in improved solutions of this type.

For example, there is an increasing adoption of automatic barriers at the parison side to prevent access and provide protection in case of unintentional contact with the forming section components while it is in operation. In practice, these barriers are only lowered when it is necessary for operators to access the forming sections (for maintenance and/or mould changes).

In addition, it was proposed to use vertical protection grids to physically separate the spaces above the boxes at the boundary between adjacent forming sections.

As part of this trend, therefore, there is a need to refine known solutions for the above-mentioned aspects in a relatively easy way, without compromising or complicating the operation, maintenance, and possible replacement of existing components.

DE202016000461U1 and GB2466834A show solutions with barriers. In particular, DE202016000461U1 corresponds to the preamble of claim 1.

The purpose of the present invention is, therefore, to provide an individual section machine for forming hollow glassware that can fulfil the above requirements, preferably in a simple and economical manner, in particular by improving ergonomics and/or ease of use.

### Summary of the invention

According to the present invention, an individual section machine for forming hollow glassware, as defined in the appended claim 1, is provided.

The dependent claims define preferred embodiments of the present invention.

### Brief description of the drawings

In order to better understand the invention, a preferred, non-limiting embodiment thereof will now be described by way of example, with reference to the accompanying drawings, in which:
- Figure 1 is a rear perspective view showing, in a simplified and partial manner, a preferred embodiment of the individual section machine for forming hollow glassware according to the present invention;
- Figure 2 is a front, partial view of the machine in Figure 1;
- Figures 3 and 4 are similar to Figure 1, and show parts of the machine of the present invention, on an enlarged scale and with different operating positions; and
- Figure 5 is a perspective showing a detail of Figure 1 on a further enlarged scale, in a simplified manner and with parts removed for clarity.

### Description of preferred embodiments

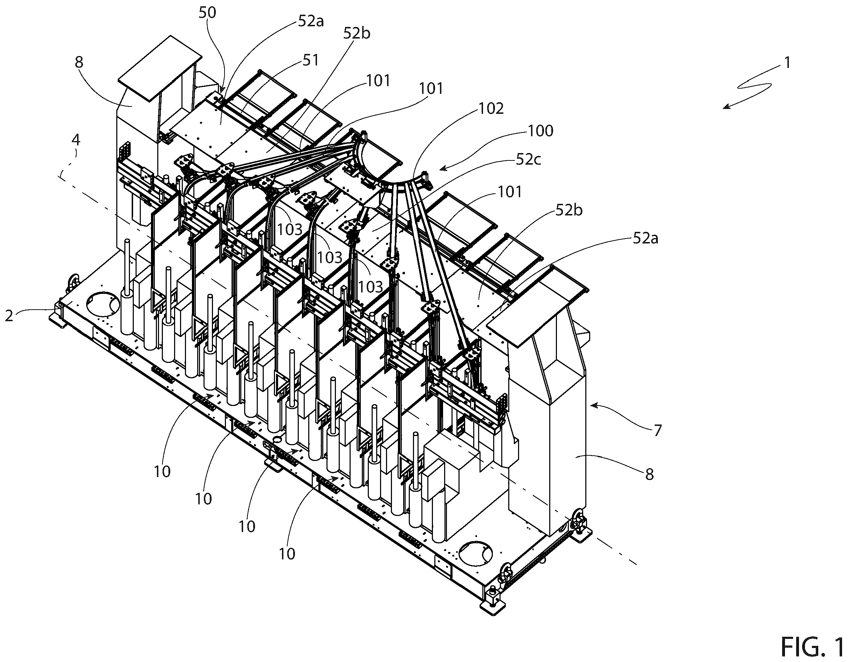

In Figure 1, reference number 1 indicates, as a whole, an individual section machine, commonly referred to as an IS machine (illustrated in a partial and simplified manner), for forming hollow glassware.

The machine 1 comprises a base 2 that is substantially parallelepipedal in shape, flat in the vertical direction, extends along a horizontal axis 4, rests on the floor by means of a plurality of feet and can be raised by means of a plurality of eyebolts attached to opposite axial ends of the base 2.

The machine 1 also includes a gantry structure 7 supported by the base 2. The structure 7 consists of two uprights 8, fixed to opposite axial ends of the base 2, and a crossbeam, not shown, which extends parallel to the axis 4 and is fixed to the upper ends of the uprights 8.

The machine 1 comprises a plurality of forming sections 10, which are arranged on the base 2, below the crossbeam of the gantry structure 7, and in positions aligned with each other along the axis 4 between the two uprights 8, and are configured to form respective hollow glass products, which are then transferred, at the outlet, to a conveyor, not illustrated, parallel to the axis 4.

The forming sections 10 are modular, so the following description refers to only one of them.

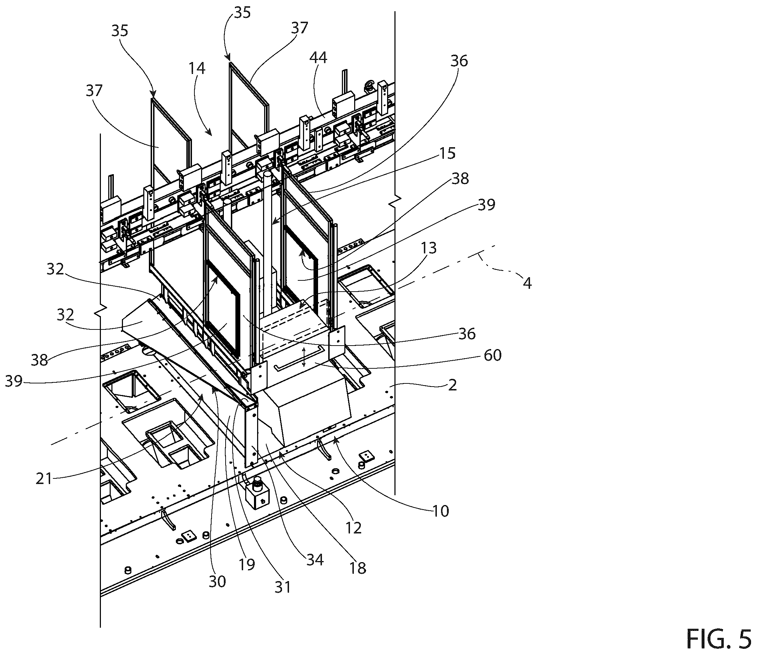

With reference to Figure 5, the forming section 10 comprises a support body, externally parallelepiped-shaped, internally hollow, arranged on an upper face of the base 2, usually referred to as a box, and indicated by reference number 12 in the attached figures. The box 12 can be monolithic or consist of walls fixed together.

The forming section 10 has a parison side 13 and a finishing side 14, which are diametrically opposite each other with respect to the axis 4 and house a blank mould and a finishing mould, respectively, having a certain number of forming cavities, between one and four, for forming glassware from respective glass gobs, which are fed to the blank mould by a gob distribution and delivery system 100, associated with the machine 1 and partially illustrated in Figure 1. The blank and finishing moulds consist of corresponding half-moulds, which are movable under the thrust of respective opening/closing units, known and not described in detail.

In addition, the forming section 10 comprises a plurality of operating units, which are known and not illustrated in detail, collectively indicated by reference number 15 in Figure 5, and supported by the box 12. In particular, the operating units 15 include: a funnel mechanism, arranged above the box 12, to guide the glass gobs into the forming cavities of the blank mould; a buffer mechanism, arranged above the box 12, to close the upper openings of these forming cavities; a punch unit, arranged on the parison side 13 within the box 12, to deform the glass gobs dropped into the blank mould, and to form respective semi-finished glass products (usually referred to as "parisons"); an inversion unit, arranged above the box 12 at the boundary between the parison side 13 and the finishing side 14, to grasp the semi-finished products formed in the blank mould and transfer them into the finishing mould; a blow head, arranged above the box 12 on the finishing side 14, to exert pneumatic pressure in the finishing mould; an extraction unit arranged at the finishing side, to grasp the glass products that have been formed in the finishing mould, and transfer them to a support plane, from which the same glass products will then be pushed onto the outlet conveyor, mentioned above. In addition to these operating units, the forming section 10 can be equipped with auxiliary operating units (e.g. for cleaning, swabbing, cooling, etc....).

The boxes 12 of the forming sections 10 are preferably made with standard external dimensions, i.e. with identical external dimensions to those found in known solutions. For example, the size of each box 12 along the axis 4 is about 21 inches, or about 53 centimetres.

The boxes 12 project from the upper face of the base 2, as mentioned above, and are fixed directly to the latter (e.g. by bolts). The boxes 12 comprise respective front walls 18, arranged vertically and in positions aligned with each other along the parison side 13, and a respective pair of side walls 19, which are vertical and parallel to each other and face the adjacent boxes 12.

The side walls of the boxes 12 are preferably spaced apart along the axis 4, whereby the boxes 12 are separated from each other by a corresponding vertical slot 21. Consequently, the boxes 12 are not attached directly to each other, but only indirectly, as will also be described below.

By spacing out the boxes 12, it is possible to support a lower number of forming sections than if the side walls 19 were directly resting against each other, as in known solutions. For example, the base 2 can include ten forming sections (instead of twelve, in the case just indicated in the prior art). Despite this drawback, better ergonomics can be ensured when it is necessary to access the forming sections 10 to perform maintenance and/or mould change operations.

The distance between the side walls 19 of the boxes 12 is preferably defined by a constant pitch, which is the same for the entire machine 1. In this specific example, this distance is approximately 4 inches, or about 10 centimetres.

The slots 21, i.e. the intermediate gaps between the boxes 12, are preferably engaged by respective gutter structures 30, coupled to the side walls 19 of the boxes 12 and/or the base 2, and having respective chutes 31, which slope downwards from the parison side 13 towards the finishing side 14. In particular, a vertical covering wall 34 is arranged to close each slot 21 at the parison side 13, e.g. in a position aligned with the front walls 18.

Therefore, the side walls 19 of the boxes 12 are connected to each other via the gutter structures 30, but the latter have negligible stiffness, so they do not contribute to supporting the forming sections 10.

During maintenance operations, the gutter structures 30 are used by the maintenance workers as a discharge channel at the side of the boxes 12, in particular to dump any glass scrap present in the forming sections 10, so that such scrap is then collected at the lower end of the chutes 31, i.e. downstream of the finishing side 14. In general, however, it is possible that the space available in the slots 21 can be used in a different way from that just mentioned.

According to a preferred aspect of the present invention, irrespective of whether or not the boxes 12 are spaced apart, the machine 1 comprises a plurality of barrier structures 35 that are arranged at the boundary between adjacent forming sections 10 so as to physically separate the forming sections 10 from each other. The barrier structures 35 are preferably fixed to the side walls 19, e.g. at their upper horizontal edge, and do not have attachment points on the upper surface of the boxes 12 (so as not to obstruct the operating units 15).

Each barrier structure 35 preferably comprises two vertical barriers 36 and 37, defined by separate bodies, extending orthogonally to the axis 4 at the parison side 13 and finishing side 14, respectively. The barriers 36 and 37 preferably include respective grids.

On the parison side 13, the barrier structure 35 preferably has a window 38 engaged by a portion of the barrier 39 that is flat, but can be replaced with a different barrier portion, not illustrated, having the same outer perimeter, but with a concave shape, for example to leave more space for the funnel mechanism if the latter has larger dimensions, in order to avoid interference with the barrier 36.

The barriers 36, 37 are fixed directly or indirectly at their upper ends to a fixed crossbeam 44, which is parallel to the axis 4 and is supported by the uprights 8. The fixed crossbeam 44, in particular, is defined by a tubular structure used as a duct for the passage of air.

As mentioned above, the barrier structures 35 have the function and advantage of physically isolating each forming section 10, on opposite sides, to form a sort of cell, and prevent workers from bumping into components of adjacent forming sections, which may be hot and/or moving, during maintenance and/or mould change operations, in order to increase ergonomics and ease of use.

With reference to Figure 1, in order to further improve the conditions of use in this cell when workers need to access it, according to this invention the machine 1 comprises a cover or roof 50, comprising a frame 51 supported by the uprights 8, and a plurality of protection walls 52a, 52b, 52c. The latter are supported by the frame 51 above the forming sections 10, in positions substantially aligned with each other along a direction parallel to the axis 4, and have the function of protecting the workers when accessing the same forming sections 10, against a possible fall of cooling or lubrication liquids, of objects, or of molten glass from the gob distribution and delivery system 100.

The latter is known, and comprises a plurality of channels 101, extending radially from a distributor 102, which is supported by the crossbeam of the gantry structure 7 in a manner not illustrated in detail. The channels 101 have a concavity facing upwards to guide the glass gobs from the distributor 102 to respective deflectors 103, which have concavity opposite to the one of the channels 101 and then guide the glass gobs to the blank moulds. The roof 50 is positioned below the distributor 102 and the crossbeam of the gantry structure 7, preferably at a height that meets at least one of the following requirements:
- adequate space for an operators' platform (not shown) at the level of the distributor 102;
- easy access for workers to the forming sections 10 above the boxes 12;
- adequate space for a rail for a swabbing robot and a hoist.

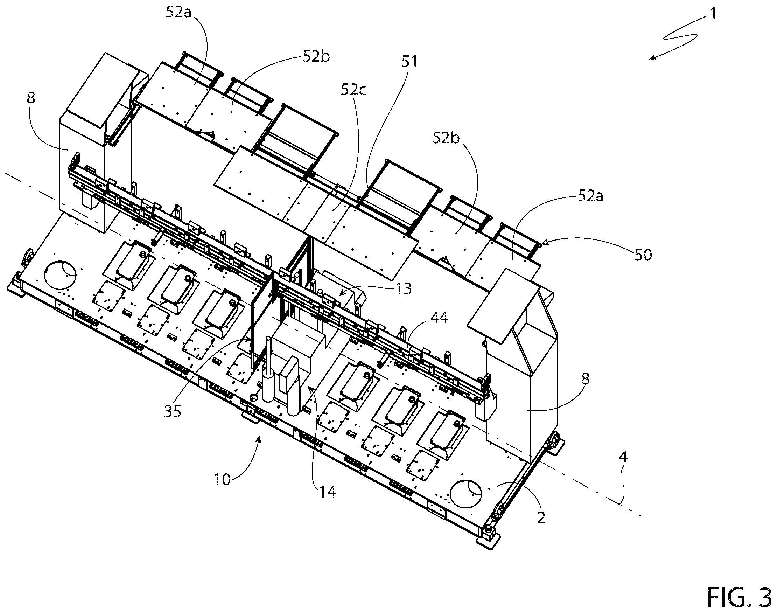

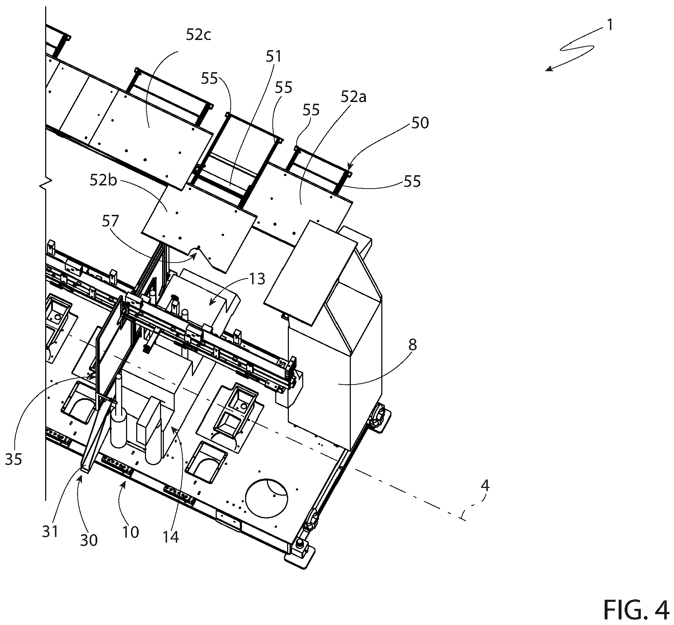

According to an aspect of the present invention, the walls 52a, 52b, 52c are coupled to the frame 51 in such a way that they are movable between a working position, in which they are horizontal and are arranged in vertically aligned positions with the parison side 13 of the forming sections 10; and a rest position, in which they are horizontally removed towards the outside of the machine 1, so as to be spaced apart from the forming sections 10 and, therefore, from the channels 101. In the direction parallel to the axis 4, each of the walls 52a, 52b, 52c has a width at least equal to the length of a single forming section 10, so as to cover it completely. As shown in Figures 3 and 4, the walls 52a, 52b, 52c are movable between the working and rest positions independently of each other. The movement can be achieved manually, or via remote-controlled actuators (not shown).

In particular, with reference to Figure 4, each of the walls 52a, 52b, 52c is coupled to the frame 51 via respective guides 55, so as to slide along these guides 55 between the rest and working positions. More specifically, the guides 55 are defined by straight, horizontal rails orthogonal to the axis 4. Alternatively, the coupling could be defined by construction solutions other than the guides, e.g. by bellows or hinges.

Furthermore, the edge of the walls 52a, 52b, 52c that faces the channels 101 can be shaped to form a recess 57, to avoid interference with the same channels 101, in the working position.

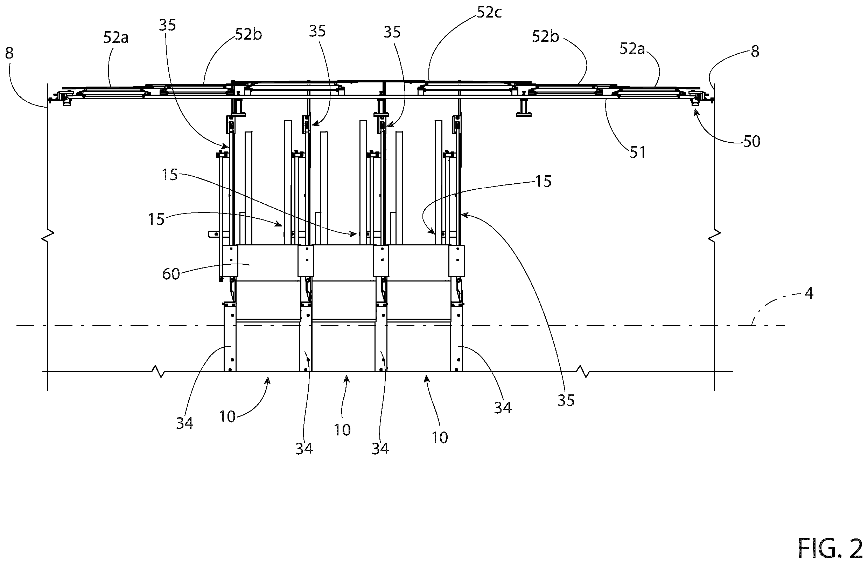

As shown in Figure 2, the walls 52a, 52b, 52c partially overlap each other along their lateral edges, so that no gap is left between them, in a direction parallel to the axis 4. In particular, the walls 52a, 52b, 52c are arranged in such a way that they slope, overall, from the centre towards the opposite side ends of the roof 50 (i.e. towards the two uprights 8). In other words, the walls 52a, arranged at the side ends of the roof 50, are lower than the walls 52b, which are adjacent; in turn, the walls 52b are lower than the wall 52c, which is centrally arranged. In this way, any liquids that fall on the roof 50 can flow naturally to the opposite side ends of the roof 50, where they can then be collected (in a manner that is not illustrated). For example, to facilitate this, the walls 52a, 52b, 52c can advantageously be slightly inclined from the centre towards the side ends of the roof 50.

It is therefore evident that the roof 50, in the working position, offers protection against a series of potentially dangerous events (falling incandescent glass in the event of malfunction of the distributor 102, or in the event of imperfect centring of the channels 101; falling objects from the aforementioned operator platform, e.g. tools used in previous maintenance and unintentionally forgotten; falling cooling liquids from scissor devices and funnels of the distributor 102; etc.) on the parison side 13.

In addition, the roof 50 also protects the same components mounted on the parison side 13, if the walls 52a, 52b, 52c are kept in the working position when the forming section 10 is in operation (and not only when it is subject to maintenance or mould changes). In particular, when the forming section 10 is in operation, it is possible to choose whether to keep the walls 52a, 52b, 52c in the working position, to favour the protection of these components, or in the rest position, to favour greater ventilation (and thus cooling) in the forming section 10.

At the same time, when the walls of the roof 50 are arranged in the rest position, the channels 101 can be easily accessed for easy replacement (in particular, this replacement takes place approximately once a week). In other words, the workers can remove the walls 52a, 52b, 52c, to perform maintenance or replacement operations on the system 100.

Advantageously, with reference to Figure 5, the forming sections 10 combine the cover or roof 50 with both the barrier structures 35, as mentioned above, and the respective front barriers 60, provided in front of the parison side 13, so as to define a cell that is confined or protected on three sides and from above when the forming sections 10 are in operation. In particular, each front barrier 60 is vertically movable relative to the corresponding box 12, under the action of an actuator not shown, between a lowered and a raised position (shown in dotted lines), independently of the front barriers 60 in the adjacent forming sections 10.

In the lowered position, the front barrier 60 is placed in front of the opening/closing mechanism of the blank mould (immediately above the box 12), so it can easily be passed over to access the components on the parison side 13. In the raised position, on the other hand, the front barrier 60 prevents access to the parison side 13 and, at the same time, visually indicates that the corresponding forming section 10 is in operation. The driving of the aforementioned actuator to raise/lower the front barrier 10 is controlled automatically according to appropriate control logics: for example, the front barrier 60 is normally placed in the raised position; the front barrier 60 is lowered when operator access is required in the corresponding forming section, and only after the mechanisms have come to a complete stop, to allow work in the work area.

A key button allows the function of the barrier to be overridden and/or tested. Optionally, a manual control is available for raising and lowering the barrier, offering more flexibility to the operator.

At the same time, in the event of any anomaly or malfunction, the front barrier 60 remains in the raised position. This control logic allows workers to have a clear view and understanding of the status of the forming station 10 before approaching it.

From the above, the advantages of the proposed solution are evident.

In fact, the latter is effective thanks to the cover or roof 50 located on the parison side 13, for workers operating around the machine 1, without compromising the necessary operations (replacement) to be performed on the channels 101. In particular, the cover or roof 50 performs its protective function not only during mould changes and maintenance of the components on the boxes 12, but also when it is necessary to intervene due to a malfunction or adjustment of the front barrier 60 and/or the valve block that is arranged in front of each forming section 10.

With a plurality of protection walls (52a, 52b, 52c), it is possible to selectively cover and uncover the forming sections 10 as required.

Furthermore, the combination with the barrier structures 35 and front barriers 60 allows each forming section 10 to be physically isolated, so that protected and confined cells are defined on essentially all sides, as explained above.

Lastly, it is clear that modifications and variations may be made to the machine 1 described and illustrated herein without departing from the scope of the present invention, as set forth in the appended claims.

In particular, there could be only one protection wall, common to all the forming sections 10, instead of having a plurality of them, arranged side by side.

In addition, the positioning and fixing of the frame 51 may differ from what is indicated as an example.

## Claims

1. An individual section machine (1) for forming hollow glassware, the machine comprising:
- a plurality of forming sections (10) arranged in positions that are aligned to each other along a longitudinal axis (4); each said forming section (10) having a parison side (13) and a finishing side (14) and comprising a blank mould in said parison side (13), a finishing mould in said finishing side (14), and a plurality of operating units (15) configured to form at least one hollow glass product in said moulds from a corresponding glass gob;
- a support structure (7), in common to all said forming sections (10); and
- an upper cover (50) comprising:
a) a frame (51) coupled in a fixed position to said support structure (7), and
b) at least one protection wall coupled to said frame (51);
**characterised in that** said protection wall is movable with respect to said frame (51) between: a working position, in which said protection wall is horizontal and is arranged above the parison side (13), for at least one forming section (10); and a rest position, in which said protection wall is spaced horizontally away, towards the outside of said machine (1).

2. The machine according to claim 1, wherein said protection wall is coupled to said frame (51) by at least one guide (55) so as to be slidable between the working and rest positions.

3. The machine according to claim 1, wherein said guide (55) is straight, horizontal and orthogonal to said longitudinal axis (4).

4. The machine according to any one of the preceding claims, wherein said protection wall consists of a plurality of walls (52a, 52b, 52c) which are arranged along a direction parallel to said longitudinal axis (4) and are movable, each, between said working and rest positions independently of the other walls.

5. The machine according to claim 4, wherein said walls (52a, 52b, 52c) are partially overlapped with each other, so that no gap is left between them in the direction parallel to said longitudinal axis (4).

6. The machine according to any one of the preceding claims, wherein said protection wall is configured so as to be sloping from the centre towards opposite side ends of said upper cover (50).

7. The machine according to any one of the preceding claims, wherein the parison sides (13) of said forming sections (10) are separated from each other by barrier structures (35), and wherein each forming section (10) comprises a respective front barrier (60), which is arranged in front of the corresponding parison side (13) and is movable between a lowered position and a raised position.

8. The machine according to claim 7, wherein each said barrier structure (35) comprises two barriers (36, 37) respectively arranged at the parison sides (13) and finishing sides (14), and defined by bodies separated from each other.

9. The machine according to claim 7 or 8, wherein said barrier structures (35) are fixed, at the bottom, to respective support bodies (12), each forming part of a respective forming section, and at the top, to a fixed longitudinal crossbeam (44), which is in common with all the forming sections (10).

## Patentansprüche

1. Individual-Section-Maschine (1) zum Formen von hohlen Glaswaren, wobei die Maschine umfasst:
- eine Vielzahl von Formabschnitten (10), die in Positionen angeordnet sind, die entlang einer Längsachse (4) zueinander ausgerichtet sind; wobei jeder Formabschnitt (10) eine Vorformlingsseite (13) und eine Endbearbeitungsseite (14) aufweist und eine Vorform in der Vorformlingsseite (13), eine Endbearbeitungsform in der Endbearbeitungsseite (14) und eine Vielzahl von Betriebseinheiten (15) umfasst, die konfiguriert sind, um mindestens ein Hohlglasprodukt in den Formen aus einem entsprechenden Glastropfen zu formen;
- eine Stützstruktur (7), die allen Formabschnitten (10) gemeinsam ist; und
- eine obere Abdeckung (50), umfassend:
a) einen Rahmen (51), der in einer festen Position mit der Stützstruktur (7) gekoppelt ist, und
b) mindestens eine Schutzwand, die mit dem Rahmen (51) gekoppelt ist;
**dadurch gekennzeichnet, dass** die Schutzwand in Bezug auf den Rahmen (51) beweglich ist zwischen: einer Arbeitsposition, in der die Schutzwand horizontal ist und oberhalb der Vorformlingsseite (13) angeordnet ist, für mindestens einen Formabschnitt (10); und einer Ruheposition, in der die Schutzwand horizontal beabstandet ist, zur Außenseite der Maschine (1) hin.

2. Maschine nach Anspruch 1, wobei die Schutzwand durch mindestens eine Führung (55) mit dem Rahmen (51) gekoppelt ist, um zwischen der Arbeits- und Ruheposition verschiebbar zu sein.

3. Maschine nach Anspruch 1, wobei die Führung (55) gerade, horizontal und orthogonal zur Längsachse (4) ist.

4. Maschine nach einem der vorhergehenden Ansprüche, wobei die Schutzwand aus einer Vielzahl von Wänden (52a, 52b, 52c) besteht, die entlang einer Richtung parallel zur Längsachse (4) angeordnet und jeweils unabhängig von den anderen Wänden zwischen der Arbeits- und Ruheposition bewegbar sind.

5. Maschine nach Anspruch 4, wobei die Wände (52a, 52b, 52c) teilweise miteinander überlappen, so dass zwischen ihnen kein Spalt in der Richtung parallel zur Längsachse (4) verbleibt.

6. Maschine nach einem der vorhergehenden Ansprüche, wobei die Schutzwand so konfiguriert ist, dass sie von der Mitte zu gegenüberliegenden Seitenenden der oberen Abdeckung (50) geneigt ist.

7. Maschine nach einem der vorhergehenden Ansprüche, wobei die Vorformlingsseiten (13) der Formabschnitte (10) durch Barrierestrukturen (35) voneinander getrennt sind und wobei jeder Formabschnitt (10) eine jeweilige vordere Barriere (60) umfasst, die vor der entsprechenden Vorformlingsseite (13) angeordnet und zwischen einer abgesenkten Position und einer angehobenen Position bewegbar ist.

8. Maschine nach Anspruch 7, wobei jede Barrierestruktur (35) zwei Barrieren (36, 37) umfasst, die jeweils an den Vorformlingsseiten (13) und Endbearbeitungsseiten (14) angeordnet sind und durch voneinander getrennte Körper definiert sind.

9. Maschine nach Anspruch 7 oder 8, wobei die Barrierestrukturen (35) unten an jeweiligen Stützkörpern (12), die jeweils einen Teil eines jeweiligen Formabschnitts bilden, und oben an einem festen Längsträger (44) befestigt sind, der allen Formabschnitten (10) gemeinsam ist.

## Revendications

1. Machine à section individuelle (1) pour le formage de corps en verre creux, la machine comprenant :
- une pluralité de sections de formage (10) disposées dans des positions alignées les unes par rapport aux autres le long d'un axe longitudinal (4) ; chaque dite section de formage (10) ayant un côté de paraison (13) et un côté de finition (14) et comprenant un moule d'ébauche dans ledit côté de paraison (13), un moule de finition dans ledit côté de finition (14), et une pluralité d'unités de commande (15) configurées pour former au moins un produit en verre creux dans lesdits moules à partir d'une paraison en verre correspondante ;
- une structure de support (7), commune à toutes lesdites sections de formage (10) ; et
- un couvercle supérieur (50) comprenant :
a) un cadre (51) couplé en position fixe à ladite structure de support (7), et
b) au moins une paroi de protection couplée audit cadre (51) ;
**caractérisée en ce que** ladite paroi de protection est mobile par rapport audit cadre (51) entre : une position de travail, dans laquelle ladite paroi de protection est horizontale et est disposée au-dessus du côté de paraison (13), pour au moins une section de formage (10) ; et une position de repos, dans laquelle ladite paroi de protection est espacée horizontalement, vers l'extérieur de ladite machine (1).

2. Machine selon la revendication 1, dans laquelle ladite paroi de protection est couplée audit cadre (51) par au moins un guide (55) de manière à pouvoir coulisser entre les positions de travail et de repos.

3. Machine selon la revendication 1, dans laquelle ledit guide (55) est droit, horizontal et orthogonal audit axe longitudinal (4).

4. Machine selon l'une quelconque des revendications précédentes, dans laquelle ladite paroi de protection consiste en une pluralité de parois (52a, 52b, 52c) qui sont disposées le long d'une direction parallèle audit axe longitudinal (4) et qui sont mobiles, chacune, entre lesdites positions de travail et de repos indépendamment des autres parois.

5. Machine selon la revendication 4, dans laquelle lesdites parois (52a, 52b, 52c) sont partiellement superposées l'une à l'autre, de sorte qu'aucun espace n'est laissé entre elles dans la direction parallèle audit axe longitudinal (4).

6. Machine selon l'une quelconque des revendications précédentes, dans laquelle ladite paroi de protection est configurée de manière à être inclinée du centre vers les extrémités latérales opposées dudit couvercle supérieur (50).

7. Machine selon l'une quelconque des revendications précédentes, dans laquelle les côtés de paraison (13) desdites sections de formage (10) sont séparés les uns des autres par des structures barrière (35), et dans laquelle chaque section de formage (10) comprend une barrière frontale (60) respective, qui est disposée devant le côté de paraison (13) correspondant et est mobile entre une position abaissée et une position relevée.

8. Machine selon la revendication 7, dans laquelle chaque dite structure barrière (35) comprend deux barrières (36, 37) disposées respectivement sur les côtés de paraison (13) et de finition (14), et définies par des corps séparés l'un de l'autre.

9. Machine selon la revendication 7 ou 8, dans laquelle lesdites structures barrière (35) sont fixées, en bas, à des corps de support respectifs (12), chacun faisant partie d'une section de formage respective, et en haut, à une traverse longitudinale fixe (44), qui est commune à toutes les sections de formage (10).
